Europäisches Patentamt

European Patent Office

Office européen des brevets

(11) Veröffentlichungsnummer: **0 057 823**
**A2**

(12) **EUROPÄISCHE PATENTANMELDUNG**

(21) Anmeldenummer: **82100258.1**

(22) Anmeldetag: **15.01.82**

(51) Int. Cl.³: **B 05 D 7/14**
**B 29 C 27/28, F 16 L 58/10**

(30) Priorität: **21.01.81 DE 3101684**

(43) Veröffentlichungstag der Anmeldung:
**18.08.82 Patentblatt 82/33**

(84) Benannte Vertragsstaaten:
**AT BE CH DE FR GB IT LI NL**

(71) Anmelder: **HOECHST AKTIENGESELLSCHAFT**
**Postfach 80 03 20**
**D-6230 Frankfurt/Main 80(DE)**

(72) Erfinder: **Eckner, Günther**
**Wiesenstrasse 24**
**D-6238 Hofheim am Taunus(DE)**

(54) Verfahren zur Beschichtung von Metallrohren und Verwendung der nach diesem Verfahren hergestellten Rohre.

(57) Verfahren zur Beschichtung von Metallrohren, wobei man auf ein erhitztes Metallrohr, das eine Temperatur von mindestens 200°C hat, eine Klebstoffschicht und darauf ein Äthylen-Polymeres in Pulverform und/oder ein unmittelbar aus einem Extruder austretendes Band aus einem Äthylen-Polymeren aufbringt, darauf den Überzug auf eine Temperatur von etwa 110 bis 170°C abkühlen läßt und dann in einer weiteren Stuffe einen freitragenden Film eines Äthylen-Polymeren mit einem Schmelzindex von 0,1 bis 7 g/10 min (190°C/2,16 kg) bei dieser Temperatur aufbringt, dadurch gekennzeichnet, daß man in erster Stufe ein Pulver aus wenigstens einem bei 200°C gut verlaufenden wärmehärtbaren Harz der Gruppe Polyepoxyd, Polyester, selbstvernetzendes Acrylharz auf das mindestens 200°C heiße Metallrohr aufbringt, darauf bei dieser Mindesttemperatur in zweiter Stufe die Klebstoffschicht aufbringt und auf die noch flüssige Klebstoffschicht wenigstens eine Schicht aus mindestens einem Äthylen-Polymeren der Gruppe Polyäthylen und Äthylen-Vinylacetat-Acrylsäure-Copolymerisate aufbringt, und Verwendung der nach dem Verfahren hergestellten Rohre in Rohrleitungen.

HOECHST AKTIENGESELLSCHAFT    HOE 81/F 012


Verfahren zur Beschichtung von Metallrohren und Verwendung der nach diesem Verfahren hergestellten Rohre


Es ist bekannt, Metallrohre mit einem direkt aus dem Extruder kommenden Band aus Polyäthylen zu beschichten. Die Temperatur der Rohre beträgt hierbei etwa 180°C. Die verwendeten Polyäthylentypen haben Schmelzindices (diese beziehen sich hier und im folgenden stets auf 190°C/2,16 kg) von 0,4 bis 0,7 g/10 min. Für den Aufbau von Schichten von etwa 3,5 mm Dicke werden hierbei etwa 4 Minuten benötigt.

Andererseits ist die Beschichtung von Metallrohren mit Polyäthylenpulver bekannt, das z. B. durch Aufrieseln, Aufschleudern oder Anwerfen auf das auf 300 bis 360°C vorgewärmte Rohr aufgebracht wird. Die bei diesem Verfahren verwendeten Polyäthylentypen haben Schmelzindices von 1,2 bis 1,7 g/10 min. Der Schmelzindex muß hierbei höher sein als beim erstgenannten Verfahren, weil hier ein leichteres Schmelzen wesentlich ist. In Abhängigkeit vom Rohrdurchmesser beträgt die Beschichtungszeit bei Pulverbeschichtungsverfahren im allgemeinen etwa 5 Minuten. Dieses Verfahren hat jedoch den Nachteil, daß verhältnismäßig hohe Vorwärmtemperaturen und damit ein hoher Energieaufwand erforderlich sind, weil aus Gründen eines ausreichenden Korrosions-Schutzes der Schmelzindex niedrig sein muß.

Es war daher ein Verfahren mit geringerem Energie- und Zeitaufwand erwünscht, das Produkte mit gleich guten Eigenschaften wie die bekannten Verfahren liefert.

Nach einem weiteren bekannten Verfahren werden Stahlrohre kontinuierlich beschichtet, indem vor dem Beschichten, insbesondere vor dem Erhitzen ein Haftvermittler aufgebracht wird, darauf die Rohre auf die zum Aufschmelzen des pulverförmigen Kunststoffs erforderliche Temperatur gebracht und dann mit dem Kunststoff im Wirbelsinterverfahren beschichtet und darauf abgekühlt werden. Nach der Beschichtung wird auf den noch plastischen Kunststoffüberzug eine Bahn eines Verstärkungsmaterials aufgebracht und in den Kunststoff eingebettet.

Es ist außerdem bekannt, Rohre mit Bändern aus Polyäthylen zu umwickeln. Dabei wird zunächst ein verzinktes oder sandgestrahltes Rohr mit einem Kleber überzogen und darauf aus einem Extruder die Kunststoffummantelung aufgebracht. Dann wird eine weitere Klebschicht und schließlich eine weitere Polyäthylenummantelung aufgebracht, wobei als Kunststoffschicht jeweils Hochdruckpolyäthylen verwendet wird.

Über die Natur des Klebers ist hierbei nichts offenbart.

Es wurde auch schon ein Verfahren zur Beschichtung von Metallrohren durch Aufbringen von Polyäthylenpulver auf vorgewärmte Rohre vorgeschlagen, wobei man zunächst ein Polyäthylen mit einem Schmelzindex von 15 bis 70, vorzugsweise 17 bis 25 g/10 min auf ein erwärmtes Metallrohr, das eine Temperatur von mindestens 200°C hat, aufbringt, darauf den Überzug auf eine Temperatur von etwa 110 bis 170°C, vorzugsweise 110 bis 120°C abkühlen läßt und darauf bei dieser Temperatur in dritter Stufe einen freitragenden Polyäthylenfilm, z. B. ein Band mit einem Schmelzindex von 0,1 bis 7 g/10 min aufbringt.

Nach einer Ausführungsform dieses Verfahrens ist es möglich, dem Polyäthylenpulver noch ein Zusatzharz in Form

eines Polymerisats, z. B. Polyvinylacetat, Äthylen-Vinylacetat-Copolymerisat, Äthylen-Acrylsäure- und/oder Acrylester-Copolymerisat, gegebenenfalls mit weiteren Comonomeren, oder andere Polymerisate oder diese Polymerisate vor dem Aufbringen des Polyäthylenpulvers auf das Rohr aufzutragen. Dieselben Zusatzharze können auch in dem Polyäthylenfilm in einem Anteil von 2 bis 5 Gew.-%, bezogen auf Polyäthylen, enthalten sein.

Ein anderes bereits vorgeschlagenes Verfahren sieht das Beschichten von Metallrohren durch Aufbringen von Polyäthylen auf vorgewärmte Rohre vor, wobei man zunächst ein Polyäthylenpulver mit einem Schmelzindex von etwa 1,2 bis 1,7 g/10 min oder ein unmittelbar aus einem Extruder austretendes Band mit einem Schmelzindex von maximal 1,7 g/ 10 min auf ein Metallrohr, das im Fall der Pulverbeschichtung eine Temperatur von mindestens 300°C und im Fall der Beschichtung vom Extruder maximal 250°C hat, aufbringt, darauf den Überzug auf eine Temperatur von etwa 110 bis 170°C abkühlen läßt und darauf in dritter Stufe einen frei-tragenden, lichtstabilisierten, hellfarbigen Polyäthylen-film mit einem Schmelzindex von 0,4 bis 1,1 g/10 min bei dieser Temperatur aufbringt.

Auch hierbei können die genannten Polymerisate dem Polyäthylen beigemischt oder gesondert auf das Rohr aufgetragen werden.

Die beiden bereits vorgeschlagenen Verfahren haben sich gut bewährt. Für bestimmte Zwecke war es jedoch erwünscht, die Verfahren und die danach hergestellten Produkte noch zu modifizieren bzw. zu verbessern.

Gegenstand der vorliegenden Erfindung ist ein Verfahren zur Beschichtung von Metallrohren, wobei man auf ein erhitztes Metallrohr, das eine Temperatur von mindestens 200°C hat, eine Klebstoffschicht und darauf ein
Äthylen-Polymeres in Pulverform und/oder ein unmittelbar
aus einem Extruder austretendes Band aus einem Äthylen-
Polymeren aufbringt, darauf den Überzug auf eine Temperatur von etwa 110 bis 170°C abkühlen läßt und dann in einer
weiteren Stufe einen freitragenden Film eines Äthylen-
Polymeren mit einem Schmelzindex von 0,1 bis 7 g/10 min
(190°C/2,16 kg) bei dieser Temperatur aufbringt, das dadurch gekennzeichnet ist, daß man in erster Stufe ein
Pulver aus wenigstens einem bei 200°C gut verlaufenden
wärmehärtbaren Harz der Gruppe Polyepoxyd, Polyester und
selbstvernetzendes Acrylharz auf das mindestens 200°C
heiße Metallrohr aufbringt, darauf bei dieser Mindesttemperatur in zweiter Stufe die Klebstoffschicht aufbringt und auf die noch flüssige Klebstoffschicht wenigstens eine Schicht aus mindestens einem Äthylen-Polymeren
der Gruppe Polyäthylen und Äthylen-Vinylacetat-Acrylsäure-Copolymerisate aufbringt.

Durch das erfindungsgemäße Verfahren wird es möglich, beschichtete Rohre herzustellen, die auch erschwerten Verlegungsbedingungen, z. B. dem Transport über schwere oder
steinige Böden standhalten, ohne daß Beschädigungen der
Rohrbeschichtung eintreten.

Zweckmäßig wird das Metallrohr vor dem Aufbringen der
ersten Pulverschicht auf eine Temperatur von 220 bis 300°C,
z. B. auf etwa 270°C vorgewärmt. Die in erster Stufe aufgebrachte Schicht hat eine Dicke von 100 bis 350 µm, vorzugsweise 150 bis 250 µm. Durch das Aufbringen einer
Schicht aus einem härtbaren Harz wird eine ausreichende
Härte, Haftfestigkeit und Temperaturbeständigkeit dieser
Schicht gewährleistet. Diese Schicht kann beispielsweise elektrostatisch, durch Besprühen unter Druck (Spritzpistole), durch Schüttsintern oder im Rieselverfahren aufgebracht werden.

Geeignete Epoxydharze für die Grundschicht sind z. B. feste Harze auf der Basis von Diphenylolpropan und/oder Diphenylolmethan und Epichlorhydrin mit einem Epoxydäquivalentgewicht von 600 bis 2000, vorzugsweise 700 bis 1500, insbesondere 875 bis 1100, gegebenenfalls auch ein Gemisch mehrerer Epoxydharze.

Geeignete härtbare Polyester sind beispielsweise ungesättigte Polyester mit freien OH-Gruppen, die mit Polycarbonsäuren, deren Anhydriden und/oder mit - gegebenenfalls verkappten - Polyisocyanaten gehärtet werden. Es ist auch möglich, COOH-Gruppen enthaltende Polyester zusammen mit den Epoxydharzen zu verwenden.

Als härtbare Acrylharze sind selbstvernetzende verätherte methoxylierte Harze auf der Grundlage von Acryl- und/oder Methacrylamiden geeignet. Es lassen sich auch Harze aus Acryl- und/ oder Methacrylsäureestern mehrwertiger Alkohole verwenden, die mit Aminen, vor allem Aminharzen oder mit Polyisocyanaten gehärtet werden. Ferner eignen sich Acrylharze mit eingebauten Glycidylgruppen, die mit Polycarbonsäure-Komponenten gehärtet werden.

Die Klebstoffschicht enthält als wesentlichen Bestandteil ein Copolymeres auf Basis von Äthylen, Vinylacetat und mindestens einem weiteren Monomeren. Sie hat z.B. eine Schichtdicke von mindestens 50 µm und vorzugsweise höchstens 250 µm und kann eine unterschiedliche chemische Zusammensetzung aufweisen. Sie kann z.B. a) ein Vinylacetat-Äthylen-Acrylsäure-Acrylsäureester-Copolymeres (Schmelzindex z.B. etwa 15 bis 30 g/10 min), b) ein Vinylacetat-Äthylen-Acrylsäure-Copolymeres (Schmelzindex z.B. etwa 20 bis 35 g/10 min) oder c) Vinylacetat-Äthylen-Vinylalkohol-Copolymeres (Schmelzindex z.B. etwa 55 bis 75 g/10 min) als Bestandteil enthalten. Der Anteil des Copolymeren beträgt im allgemeinen mindestens 25, vorzugsweise mindestens 50 Gew.-% und insbesondere mindestens 75 Gew.-%, wobei der restliche Anteil der Klebstoffschicht gewöhnlich aus Polyäthylen besteht. Der Monomerenanteil für die Herstellung des Copolymeren

- 6 -

a) kann z. B. 5 bis 10 Gew.-% Vinylacetat, 5 bis 10 Gew.-% Acryl- und/oder Methacrylsäure, 0,5 bis 10 Gew.-% Acryl- und/oder Methacrylsäureester und mindestens 70 Gew.-% Äthylen, des Copolymeren b) 0,5 bis 10 Gew.-% Vinylacetat, 5 bis 10 Gew.-% Acryl- und/oder Methacrylsäure und mindestens 80 % Äthylen, des Copolymeren c) 0,5 bis 10 Gew.-% Vinylacetat, 5 bis 25 % Vinylalkohol und mindestens 65 Gew.-% Äthylen betragen. Bevorzugt hat die Klebschicht eine Dicke von 70 bis 100 µm. Die Estergruppe der (Meth)-acryl- säureester-Komponente leitet sich von einwertigen Alkoholen mit 1 bis 18 C-Atomen ab.

Die erste Schicht des Äthylen-Polymeren dient dazu, die Grundschicht gegen Verletzungen zu schützen. Sie wird zweckmäßig aus Polyäthylen mit einem Schmelzindex von 1,2 bis 70, vorzugsweise 17 bis 25 g/ 10 min hergestellt. Ihre Schichtdicke beträgt im allgemeinen 1,5 bis 4 mm.

Falls das Äthylen-Polymere der auf die Klebstoffschicht aufgebrachten Schichten aus einem Äthylen-Vinylacetat- Acryl- bzw. Methacrylsäure-Copolymeren besteht, wird zweckmäßig ein solches Copolymeres verwendet, dessen Vinylacetat-Anteile 15 bis 50, vorzugsweise 25 bis 40 Gew.-% und dessen Acryl- bzw. Methacrylsäure-Anteil 4 bis 15, vorzugsweise 6 bis 12 Gew.-% ausmacht.

Eine weitere Schicht aus Äthylen-Polymeren, die zweckmäßig hellfarbig ist und auch lichtstabilisiert sein kann, kann z. B. in Form eines Bandes mit einem Schmelzindex von 0,3 bis 1,2 g/10 min und von 100 bis 350 µm, vorzugsweise 150 bis 250 µm, beispielsweise 0,2 mm Dicke aufgebracht werden. Sie kann z. B. aus Polyäthylen oder Äthylen-Copolymeren z. B. solchen aus denselben Komponenten wie bei den Copolymeren der Klebstoffschicht bestehen. Die Copolymeren können sich aber auch von denjenigen der Klebstoffschicht unterscheiden.

Als Lichtstabilisatoren für den hellfarbenen Polyäthylenfilm sind beispielsweise Verbindungen vom Benzotriazoltyp, aber auch andere für die Stabilisierung übliche Verbindungen geeignet.

Das erfindungsgemäße Verfahren hat den Vorteil, daß es eine günstige Arbeitsgeschwindigkeit ermöglicht. Außerdem bewirkt eine hellfarbige Deckschicht zusätzlich einen guten Schutz der Rohre gegen zu starke Erwärmung bei längerer Lagerung im Freien unter starker Wärmeeinwirkung, z. B. durch Sonneneinstrahlung oder durch Verlegung in stark erwärmten Bodenschichten. Die Beschichtung aus dem Extruder gestaltet sich ebenfalls sehr einfach und zeitsparend ohne zusätzlichen apparativen Aufwand. Das aus dem Extruder austretende Band hat vorteilhaft einen Schmelzindex von mindestens 0,4 g/10 min.

Zweckmäßig hat das Polyäthylen bei der Pulverbeschichtung in erster Stufe eine Teilchengröße von 1 bis 600 µm, vorzugsweise 100 bis 400 µm. Der freitragende Polyäthylenfilm wird mit Vorteil in Form eines Polyäthylenbandes aufgebracht. Das Aufbringen kann auf ein rotierendes Rohr erfolgen. Das bringt den Vorteil mit sich, daß das Band automatisch gewickelt werden kann. Die Bandbreite kann beliebig variiert werden. Sie beträgt z. B. mindestens 20 mm. Im allgemeinen wird von einer Bandbreite bis etwa 1 m Gebrauch gemacht. Beim Auftragen ist darauf zu achten, daß sich die einzelnen Windungen überlappen bzw. daß gleichzeitig eine gegenseitige Verschweißung der einzelnen Windungen erfolgt, um einen einwandfreien Korrosionsschutz zu erzielen. Die Schichtdicke der Bänder liegt gewöhnlich bei 100 bis 400 µm, vorzugsweise 100 bis 200 µm.

Wenn hellfarbige Bänder eingesetzt werden, sind diese vorzugsweise weiß. Jedoch kann auch eine andere Farbe gewählt werden, z. B. die Warnfarbe Gelb, aber auch Hellorange, Hellblau, Hellgrün oder dergleichen. Gegebenenfalls können die hellfarbenen Bänder auch zur Kennzeichnung der Rohre dienen.

Die Geschwindigkeit, mit der die Beschichtung vorgenommen wird, kann in weiten Grenzen variieren. Sie ist von der Schichtdicke und vom Rohrdurchmesser abhängig. Beispielsweise ist bei einem äußeren Rohrdurchmesser von 50 bis 2000 mm eine Mindestschichtdicke zwischen 1,5 und 4 mm für einen ausreichenden Korrosionsschutz erforderlich. Für die Beschichtung von 12 m Länge eines solchen Rohres mit einem Durchmesser von 1500 mm und einem Überzug von 3,5 mm Schichtdicke werden nach dem erfindungsgemäßen Verfahren z. B. etwa 15 bis 45, im allgemeinen um 30 Minuten benötigt. Für die Beschichtung eines Rohres von 400 mm Durchmesser mit einer Schichtdicke von 1,5 mm (dies ist die Mindestdicke für ausreichenden Korrosionsschutz) sind für eine 12 m lange Beschichtung im allgemeinen etwa 8 bis 20, vorzugsweise 15 Minuten erforderlich.

Die Anforderung bezüglich Mindestschichtdicke, Porenfreiheit, Schälfestigkeit, Schlagbeständigkeit, Eindruckwiderstand, Reißdehnung, spezifischem Umhüllungswiderstand, Wärme- und Lichtalterung gemäß Vorschriften von DIN 30 670 und DIN 30 611 werden durch die erfindungsgemäß hergestellten Überzüge voll erfüllt.

Die nach dem erfindungsgemäßen Verfahren beschichteten Rohre finden vielseitige Verwendung. Wegen ihres Oberflächenschutzes sind sie vor allem für Rohrleitungen, z. B. in Rohrleitungen für die Förderung von Erdöl, aber auch von anderen gasförmigen, flüssigen oder höherviskosen Stoffen, beispielsweise Erdgas-, Wasser, Klärschlamm, Beton, Abwässem, Aufschlämmungen oder dergleichen geeignet.

Ein besonderer Vorteil ist dadurch gegeben, daß die erfindungsgemäß hergestellten Rohrleitungen eine erhöhte Wärmebeständigkeit aufweisen, so daß erhitzte Flüssigkeiten ohne Schwierigkeit durch sie gefördert werden können. Vor allem ermöglicht die Erfindung auch Fördergut, das eine erhöhte Temperatur, z. B. bis etwa 160°C aufweist, ohne Beeinträchtigung des Überzuges über längere Zeiträume zu fördern.

Der Transport erhitzter Flüssigkeiten ist z. B. erforderlich, wenn die Rohre hinter Kompressor-Stationen angeordnet sind. In diesen Stationen wird das zu fördernde Medium z. B. auf Temperaturen von etwa 150°C erwärmt. In dem nachfolgenden Rohrabschnitt ergibt sich somit eine Wärmebelastung, die zwischen der Umgebungstemperatur und 150°C liegt.

Besonders vorteilhaft ist die Verwendung der erfindungsgemäß hergestellten Rohre zur Verlegung in warmen oder heißen Gebieten, z. B. auch in der Wüste.

In nachstehenden Beispielen bedeuten T Gewichtsteile und % Gewichtsprozent.

Beispiele

1) Ein Eisenrohr (Außendurchmesser 108 mm, Wanddicke 10 mm) wird auf eine Temperatur von 270°C vorgewärmt. Darauf wird ein Pulver aus einem Epoxydharz auf Basis von Diphenylolpropan und Epichlorhydrin (Epoxydäquivalentgewicht 875 bis 1100) aufgesprüht oder aufgespritzt. Innerhalb von 2 s bildet sich eine Schicht von mehr als 100 μm Dicke. Auf diese noch weiche hochviskose Schicht wird ein Pulver, bestehend aus 75 % Polyäthylen und 25 % eines Vinylacetat-Äthylen-Acrylsäure-Alkylacrylat-Copolymeren, Gewichtsverhältnis der Monomeren 3 : 76 : 1 : 20 (Schmelzindex 65 g/10 min) etwa 70 μm dick aufgebracht. Auf diese Klebstoffschicht rieselt man nun 3 Minuten lang ein Polyäthylenpulver mit einem Schmelzindex von 17 bis 25 g/10 min auf. Ist die Temperatur der Polyäthylenschicht bis auf 160°C abgekühlt, wird ein 100 μm dickes Polyäthylenband mit einem Schmelzindex von 0,7 g/10 min und mit einer Bandbreite von 20 cm derart aufgewickelt, daß sich eine 1 cm breite Überlappungszone bildet. Unter Ausnutzung der Wärme des erhitzten Rohrs verschmelzen die Schichten zu einem homogenen Verbund. Das Rohr kühlt ohne zusätzliche Kühlung innerhalb von 15 Minuten ab.

2) Ein Eisenrohr mit einem Außendurchmesser von 200 mm und einer Wanddicke von 4,5 mm wird auf . 290°C vorgewärmt. Ein Epoxydharzpulver wie nach Beispiel 1 wird mit einer Spritzpistole aufgespritzt, so daß sich innerhalb von 5 s eine 200 µm dicke homogene Schicht bildet. In diese Schicht wird ein Pulver, bestehend aus einem Gemisch von 80 T Polyäthylen und 20 T eines Vinylacetat-Äthylen-Acrylsäure-Copolymeren (Gewichtsverhältnis der Monomeren 3:86:11) (Schmelzindex 25 g/10 min) so eingebettet, daß die Klebeschicht mit der Grundschicht einen homogenen Verbund bildet. Die Schichtdicke der Klebstoffschicht liegt zwischen 70 und 100 µm. Nach 3 Minuten wickelt man ein Polyäthylenband mit einem Schmelzindex von 0,3 g/10 min, einer Breite von 40 mm und einer Dicke von 200 µm so auf die Grundschicht auf, daß sich eine Überlappungszone von etwa 1 cm bildet. Es ergibt sich ein homogener Verbund der Deckschichten. Dann wird durch 5 Minuten lange Innenkühlung auf 50 °C abgekühlt und das Rohr durch Liegenlassen weiter abgekühlt.

Patentansprüche

1) Verfahren zur Beschichtung von Metallrohren, wobei man auf ein erhitztes Metallrohr, das eine Temperatur von mindestens 200°C hat, eine Klebstoffschicht und darauf ein Äthylen-Polymeres in Pulverform und/oder ein unmittelbar aus einem Extruder austretendes Band aus einem Äthylen-Polymeren aufbringt, darauf den Überzug auf eine Temperatur von 110 bis 170°C abkühlen läßt und dann in einer weiteren Stufe einen freitragenden Film eines Äthylen-Polymeren mit einem Schmelzindex von 0,1 bis 7 g/10 min (190°C/2,16 kg) bei dieser Temperatur aufbringt, dadurch gekennzeichnet, daß man in erster Stufe ein Pulver aus wenigstens einem bei 200°C gut verlaufenden wärmehärtbaren Harz der Gruppe Polyepoxyd, Polyester, selbstvernetzendes Acrylharz auf das mindestens 200°C heiße Metallrohr aufbringt, darauf bei dieser Mindesttemperatur in zweiter Stufe die Klebstoffschicht aufbringt und auf die noch flüssige Klebstoffschicht wenigstens eine Schicht aus mindestens einem Äthylen-Polymeren der Gruppe Polyäthylen und Copolymerisate, die Äthylen, Vinylacetat und Acrylsäure enthalten, aufbringt.

2) Verfahren nach Anspruch 1, dadurch gekennzeichnet, daß man in erster Stufe eine Polyepoxydschicht mit einer Schichtdicke von 100 bis 350, vorzugsweise von 150 bis 250 µm aufbringt.

3) Verfahren nach Anspruch 1 oder 2, dadurch gekennzeichnet, daß man eine Klebstoffschicht mit einer Schichtdicke von mindestens 50 µm und vorzugsweise höchstens 250 µm aufbringt.

4) Verfahren nach einem oder mehreren der Ansprüche 1 bis 3, dadurch gekennzeichnet, daß eine Klebstoffschicht aufgetragen wird, die mindestens 25 Gew.-% eines aus Vinylacetat, Äthylen und mindestens einem weiteren Monomeren aufgebauten Copolymeren und höchstens 75 Gew.-% Polyäthylen enthält und dessen Copolymeres vorzugsweise in Form eines Vinylacetat-Äthylen-Acryl-bzw. Methacrylsäure-Acryl- bzw. Methacrylsäureester-Copolymeren, eines Vinylacetat-Äthylen-Acryl- bzw. Methacrylsäure-Copolymeren oder eines Vinylacetat-Äthylen-Vinylalkohol-Copolymeren vorliegt.

5) Verfahren nach einem oder mehreren der Ansprüche 1 bis 4, dadurch gekennzeichnet, daß das Polymere in Form eines Bandes auf ein rotierendes Rohr aufgebracht wird.

6) Verfahren nach einem oder mehreren der Ansprüche 1 bis 5, dadurch gekennzeichnet, daß man in erster Stufe ein Polyepoxyd auf Basis von Diphenylolpropan und Epichlorhydrin aufbringt.

7) Verfahren nach einem oder mehreren der Ansprüche 1 bis 6, dadurch gekennzeichnet, daß man in erster Stufe einen ungesättigten Polyester mit freien OH-Gruppen, die mit Polycarbonsäuren, deren Anhydriden und/oder Polyisocyanaten härtbar sind, aufbringt.

8) Verwendung der nach dem Verfahren gemäß Ansprüchen 1 bis 7 hergestellten Rohre in Rohrleitungen.

9) Verwendung nach Anspruch 8 für die Förderung von Erdöl.

10) Metallrohre, beschichtet nach dem Verfahren von einem oder mehreren der Ansprüche 1 bis 7.